# EUROPÄISCHE PATENTSCHRIFT

(11) **EP 1 430 669 B1**
(45) Veröffentlichungstag und Bekanntmachung des Hinweises auf die Patenterteilung: **11.05.2005**
(21) Anmeldenummer: 02772076.2
(22) Anmeldetag: 19.09.2002
(51) Int. Cl.: H04L 12/64, G06F 5/06

(54) **VERFAHREN ZUR VERARBEITUNG KONSISTENTER DATENSÄTZE**
METHOD FOR PROCESSING CONSISTENT DATA SETS
PROCEDE POUR TRAITER DES ENREGISTREMENTS COHERENTS

(30) Priorität: 26.09.2001 DE 10147423; 04.07.2002 DE 10230127
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz-Josef, 91180 Heideck (DE); KLOTZ, Dieter, 90768 Fürth (DE)
(86) Internationale Anmeldenummer: PCT/DE2002/003521
(87) Internationale Veröffentlichungsnummer: WO 2003/028321

(56) Entgegenhaltungen:
- EP-A- 1 093 252
- DE-A- 4 207 158
- US-A- 6 088 744

## Beschreibung

Die Erfindung betrifft ein Verfahren zur Verarbeitung konsistenter Datensätze durch eine asynchrone Anwendung eines Teilnehmers in einem isochronen, zyklischen Kommunikationssystem.

Datennetze werden aus vernetzten Datennetzknoten gebildet und ermöglichen die Kommunikation zwischen mehreren Teilnehmern. Kommunikation bedeutet dabei die Übertragung von Daten zwischen den Teilnehmern. Die zu übertragenden Daten werden dabei als Datentelegramme verschickt, das heißt, die Daten werden zu einem oder mehreren Paketen zusammengepackt und in dieser Form über das Datennetz an den entsprechenden Empfänger gesendet. Man spricht deshalb auch von Datenpaketen. Der Begriff Übertragung von Daten wird dabei im Weiteren synonym zur oben erwähnten Übertragung von Datentelegrammen oder Datenpaketen verwendet.

Zur Vernetzung werden beispielsweise bei schaltbaren Hochleistungsdatennetzen, insbesondere Ethernet, die Teilnehmer untereinander über Koppelknoten verbunden. Jeder Koppelknoten kann mit mehr als zwei Teilnehmern verbunden sein und auch selbst Teilnehmer sein. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. echtzeitkritischem Datenverkehr, da ein nicht rechtzeitiges Eintreffen der Daten am Bestimmungsort zu unerwünschten Resultaten beim Teilnehmer führt.

Ebenso ist aus dem Stand der Technik die Verwendung eines isochronen, zyklischen Kommunikationssystems bekannt. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer, wie beispielsweise zentrale Automatisierungsgeräte, speicherprogrammierbare Steuerungen, Kontrolleinheiten, Computer, Maschinen, die elektronische Daten mit anderen Maschinen austauschen, Antriebe, Aktoren oder Sensoren, führen bestimmte Anwendungen aus. Unter Kontrolleinheiten werden im folgenden Regler- oder Steuerungseinheiten jeglicher Art verstanden. Zur Datenübertragung werden beispielsweise Kommunikationssysteme wie z.B. Feldbus, Profibus, Ethernet, Industrial Ethernet, FireWire oder auch PCinterne Bussysteme (PCI), etc. verwendet. Datentelegramme werden dabei von einem Teilnehmer zu einem fest vorgegebenen Sendezeitpunkt in das Datennetz eingespeist.

Bei synchronen Anwendungen ist die Verarbeitung der Daten mit dem Kommunikationszyklus synchronisiert. Im Gegensatz hierzu ist die Verarbeitung von Daten bei asynchronen Anwendungen nicht mit dem Kommunikationszyklus synchronisiert. Das Lesen und Schreiben von Daten durch eine asynchrone Anwendung kann zu einem beliebigen Zeitpunkt stattfinden. Hieraus ergeben sich spezielle Erfordernisse für die Einbindung einer asynchronen Anwendung in ein isochrones, zyklisches Kommunikationssystem. Grundsätzlich sollen nur konsistente Daten von einem Teilnehmer versandt und gelesen werden. Konsistente Daten sind solche, die sich auf das gleiche Zeitintervall beziehen. Aus dem Stand der Technik bekannte Teilnehmer mit asynchronen Anwendungen besitzen einen Konsistenzpuffer und einen Kommunikationsspeicher. Soll die Anwendung Daten aus einem bestimmten Adressbereichs in Kommunikationsspeicher verarbeiten, werden diese zunächst in den Konsistenzpuffer kopiert. Erst dann erfolgt der Lesezugriff der Anwendung auf die Daten in Konsistenzpuffer. Sämtliche Adressen im Kommunikationsspeicher können daher überschrieben werden, während die Anwendung mit den konsistenten Daten im Konsistenzpuffer arbeitet.

Die Anwendung beschreibt zunächst den Konsistenzpuffer, während gleichzeitig konsistente Daten vom Kommunikationsspeicher an weitere Teilnehmer versandt werden können. Nach Beendigung des Schreibzugriffs durch die Anwendung und des Datenversands, werden die soeben geschriebenen Daten vom Konsistenzpuffer zum Kommunikationsspeicher kopiert. Hier stehen die konsistenten Daten zur weiteren Versendung bereit. Die Kopiervorgänge führen dabei zu Verzögerungen.

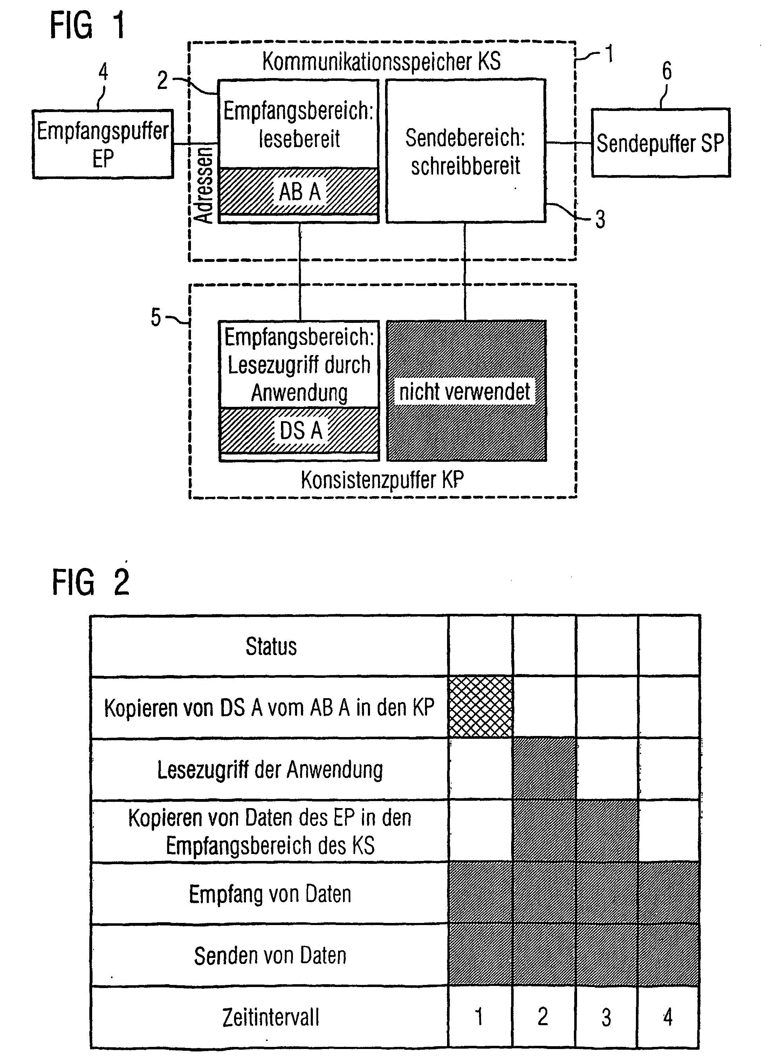

Figur 1 veranschaulicht ein System aus dem Stand der Technik zur Verarbeitung konsistenter Datenblöcke während eines Lesezugriffs. Der Kommunikationsspeicher 1 hat einen Empfangsbereich 2 und einen Sendebereich 3. Der Empfangsbereich 2 ist mit dem Empfangspuffer 4 und dem Konsistenzpuffer 5 verbunden. Der Sendebereich 3 ist mit dem Konsistenzpuffer 5 und dem Sendepuffer 6 verbunden. Im Konsistenzpuffer befindet sich der Datensatz DS A aus dem Adressbereich AB A, auf den die Anwendung zum Lesen zugreift.

Figur 2 veranschaulicht den Ablauf eines Lesezugriffs der Anwendung in dem System der Figur 1. Vor dem Lesezugriff wird der Datensatz DS A vom Empfangsbereich 2 des Kommunikationsspeichers 1 zum Konsistenzpuffer 5 kopiert. Bei dem Datensatz A handelt es sich um Daten, auf welche die Anwendung während eines Lesezugriffs zugreift bzw. zugreifen könnte. Der Datensatz DS A soll während eines Lesezugriffs konsistent sein und stammt aus dem Adressbereich AB A im Empfangsbereich 2 des Kommunikationsspeichers 1.

Aufgrund der Sicherung der Daten des von der Anwendung angeforderten Konsistenzblocks in den Konsistenzpuffer können im weiteren neu empfangene Daten des Empfangspuffers 4, die in dem Adressbereich des Konsistenzblocks liegen, in den Empfangsbereich 2 des Kommunikationsspeichers 1 gespeichert werden. Unabhängig von diesem Speichervorgang erfolgt der Lesezugriff der Anwendung auf den Datensatz DS A im Konsistenzpuffer 5. Während des Lesezugriffs können Daten vom Empfangspuffer 4 in den Empfangsbereich 2 des Kommunikationsspeichers 1 kopiert werden.

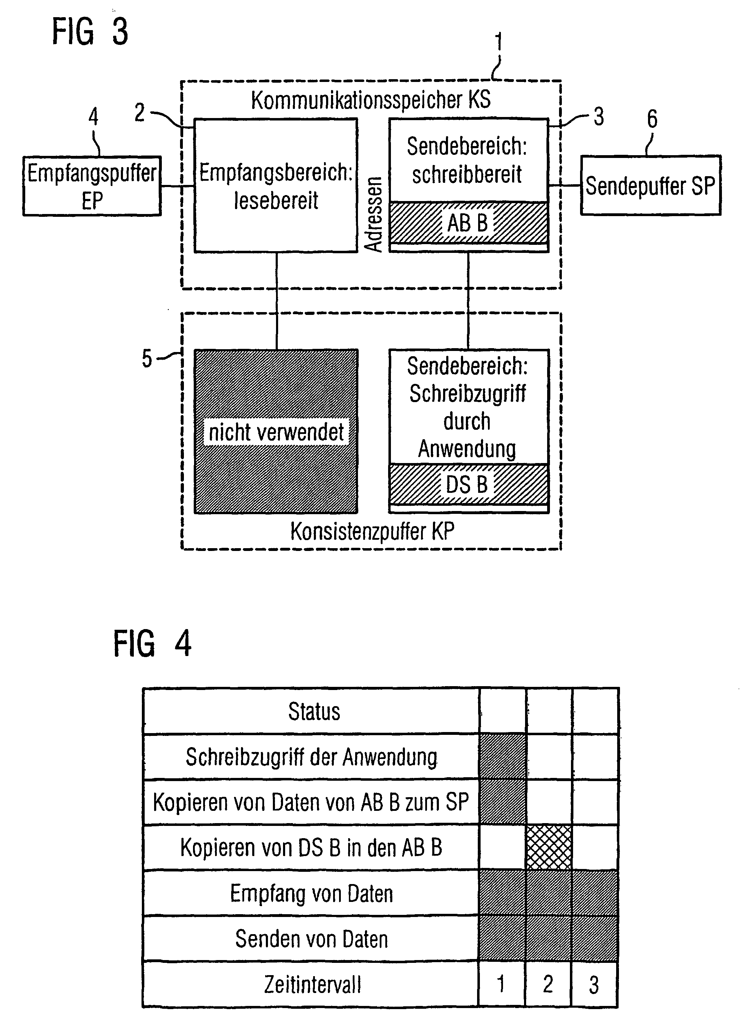

Figur 3 zeigt das System aus Figur 1 während eines Schreibzugriffs der Anwendung.

Figur 4 veranschaulicht den Ablauf eines Schreibzugriffs der Anwendung. Während die Anwendung den Datensatz DS B in den Konsistenzpuffer 5 schreibt, werden Daten vom Sendebereich 3 des Kommunikationsspeichers 1 zum Sendepuffer 6 weitergeleitet. Der Datensatz DS B soll in einen bestimmten Adressbereich AB B des Sendebereichs 5 des Kommunikationsspeichers 1 kopiert werden. Bevor dieser Kopiervorgang stattfindet, müssen alle Daten aus dem Adressbereich AB B, die während eines stattfindenden Kopiervorgangs vom Sendebereich 3 zum Sendepuffer 6 gelangen sollen, zum Sendepuffer 6 weitergeleitet werden. Der Datensatz DS B kann also erst dann vom Konsistenzpuffer 5 in den Sendebereich 3 des Kommunikationsspeichers 1 kopiert werden, wenn sowohl der Schreibzugriff als auch die Weiterleitung von Daten aus dem Adressbereich B abgeschlossen sind.

Der Erfindung liegt demgegenüber die Aufgabe zu Grunde, Verzögerungen, die sich aufgrund von notwendigen Kopiervorgängen bei einem Teilnehmer mit einer asynchronen Anwendung in einem isochronen, zyklischen Kommunikationssystem ergeben, zu minimieren.

Die der Erfindung zu Grunde liegende Aufgabe wird durch ein Verfahren mit den Merkmalen der unabhängigen Patentansprüche 1 und 2 gelöst. Bevorzugte Ausführungsformen der Erfindung sind in den abhängigen Patentansprüchen angegeben.

Beim erfindungsgemäßen Verfahren werden Daten, bevor sie von der asynchronen Anwendung gelesen werden, vorteilhaft nicht zuerst in den Konsistenzpuffer kopiert. Der Lesezugriff der Anwendung erfolgt direkt auf dem Kommunikationsspeicher. Während des Lesezugriffs werden Daten, die für einen Adressbereich im Kommunikationsspeicher bestimmt sind, auf den die Anwendung zugreift oder zugreifen könnte, vom Empfangspuffer in den Konsistenzpuffer kopiert. Lediglich diese Daten werden nach Beendigung des Lesezugriffs vom Konsistenzpuffer zum Kommunikationsspeicher kopiert. Ein Kopiervorgang ist nur dann nötig, wenn während des Lesezugriffs vom Empfangspuffer Daten empfangen werden, die an einen Adressbereich adressiert sind auf den die Anwendung zugreift bzw. zugreifen könnte.

Bei einem weiteren erfindungsgemäßen Verfahren beschreibt die Anwendung direkt den Kommunikationsspeicher. Daten aus dem Adressbereich, auf welche die Anwendung während des Schreibzugriffs zugreift bzw. zugreifen könnte, werden vor dem Schreibzugriff in den Konsistenzpuffer kopiert. Hier stehen sie zur Versendung bereit, während die Anwendung den Kommunikationaspeicher beschreibt. Vorteilhaft ist, dass die Weiterleitung der Daten vom Konsistenzpuffer zum Sendepuffer abgebrochen werden kann, sobald der Schreibzugriff auf den reservierten Adressbereich beendet worden ist und stattdessen aktuelle Daten vom Kommunikationsspeicher zum Sendepuffer weitergeleitet werden können.

Nachfolgend wird ein bevorzugtes Ausführungsbeispiel der Erfindung mit Bezugnahme auf die Zeichnung näher erläutert. Es zeigen:
- Figur 1: ein Blockdiagramm eines Systems aus dem Stand der Technik während eines Lesezugriffs,
- Figur 2: ein Zustandsdiagramm während eines Lesezugriffs nach dem Stand der Technik,
- Figur 3: ein Blockdiagramm eines Systems aus dem Stand der Technik während eines Schreibzugriffs,
- Figur 4: ein Zustandsdiagramm während eines Schreibzugriffs nach dem Stand der Technik,
- Figur 5: ein Blockdiagramm eines erfindungsgemäßen Systems während eines Lesezugriffs,
- Figur 6: ein Zustandsdiagramm während eines erfindungsgemäßen Lesezugriffs,
- Figur 7: ein Blockdiagramm eines erfindungsgemäßen Systems während eines Schreibzugriffs,
- Figur 8: ein Zustandsdiagramm während eines erfindungsgemäßen Schreibzugriffs,
- Figur 9: ein Flussdiagramm eines erfindungsgemäßen Lesezugriffs,
- Figur 10: ein Flussdiagramm eines erfindungsgemäßen Schreibzugriffs.

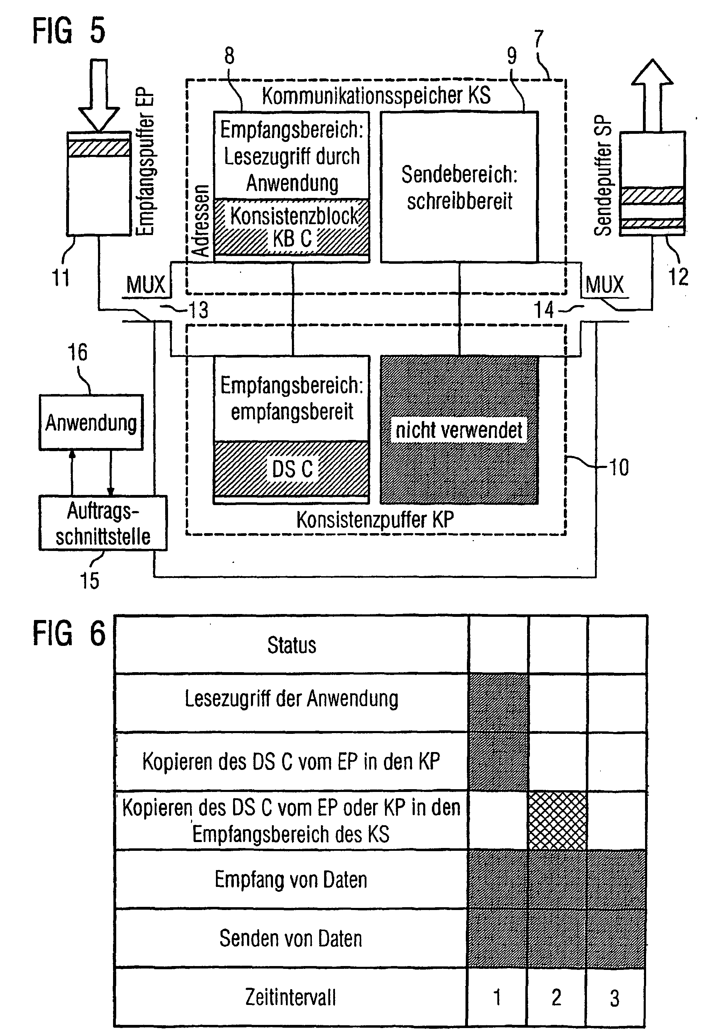

Figur 5 zeigt ein erfindungsgemäßes System eines Teilnehmers eines isochronen, zyklischen Kommunikationssystems zur Verarbeitung konsistenter Datenblöcke während eines Lesezugriffs. Das erfindungsgemäße System besitzt ebenfalls einen Kommunikationsspeicher 7 mit einem Empfangsbereich 8 und einem Sendebereich 9, einen Konsistenzpuffer 10, einen Empfangspuffer 11 und einen Sendepuffer 12. Das erfindungsgemäße System unterscheidet sich wesentlich vom Stand der Technik durch die Verknüpfung des Empfangspuffers 11 und des Sendepuffers 12 mit dem Kommunikationsspeicher 7 und dem Konsistenzpuffer 10. Mittels des Multiplexers 13 kann sowohl eine Verbindung zwischen dem Empfangspuffer 11 und dem Konsistenzpuffer 10 als auch zwischen dem Empfangspuffer 11 und dem Kommunikationsspeicher 7 hergestellt werden. Ebenso kann mittels des Multiplexers 14 alternativ eine Verbindung zwischen dem Sendepuffer 12 und dem Kommunikationsspeicher 7 oder dem Konsistenzpuffer 10 hergestellt werden. Die Auftragsschnittstelle 15 steuert die Multiplexer 13 und 14.

Im gezeigten Fall liest die Anwendung 16 Daten aus dem Adressbereich AB C des Konsistenzblocks KB C im Empfangsbereich 8 des Kommunikationsspeichers 7, während der Datensatz DS C vom Empfangspuffer 11 zum Konsistenzpuffer 10 weitergeleitet wird, der eigentlich für den Adressbereich AB C bestimmt ist. Um die Konsistenz der von der Anwendung gelesenen Daten zu gewährleisten, wird der Datensatz DS C daher in den Konsistenzpuffer kopiert. Die Auftragsschnittstelle 15 steuert den Multiplexer 13 so, dass eine Verbindung zwischen dem Empfangspuffer 11 und dem Konsistenzpuffer 10 besteht. Der Lesezugriff beeinflusst nicht die Weiterleitung von Daten vom Sendebereich 9 zum Sendepuffer 12. Der Sendebereich 9 ist daher über den Multiplexer 14 mit dem Sendepuffer 12 verbunden.

Die Nutzung des Konsistenzpuffers 10 während des Lesezugriffs ist nur deshalb notwendig, weil der Datensatz DS C für den Adressbereich AB C bestimmt ist, auf den die Anwendung 16 zugreift bzw. zugreifen könnte. Andernfalls können die Daten direkt vom Empfangspuffer 11 zum Empfangsbereich 8 des Kommunikationsspeichers 7 weitergeleitet werden. Die Auftragsschnittstelle 15 wird dann eine Verbindung zwischen dem Empfangspuffer 11 und dem Empfangsbereich 8 aufbauen.

Figur 6 veranschaulicht den Ablauf eines erfindungsgemäßen Lesezugriffs. Während des Lesezugriffs der Anwendung auf den Empfangsbereich 8 des Kommunikationsspeichers 7 wird ein Datensatz DS C, der für den Adressbereich AB C des Konsistenzblocks KB C bestimmt ist, vom Empfangspuffer 11 zum Konsistenzpuffer 10 kopiert. Nach Beendigung des Lesezugriffs wird der Datensatz DS C vom Konsistenzpuffer 10 in den Empfangsbereich 8 des Kommunikationsspeichers 7 kopiert. Der Empfang und das Senden von Daten finden unabhängig vom Lesezugriff statt.

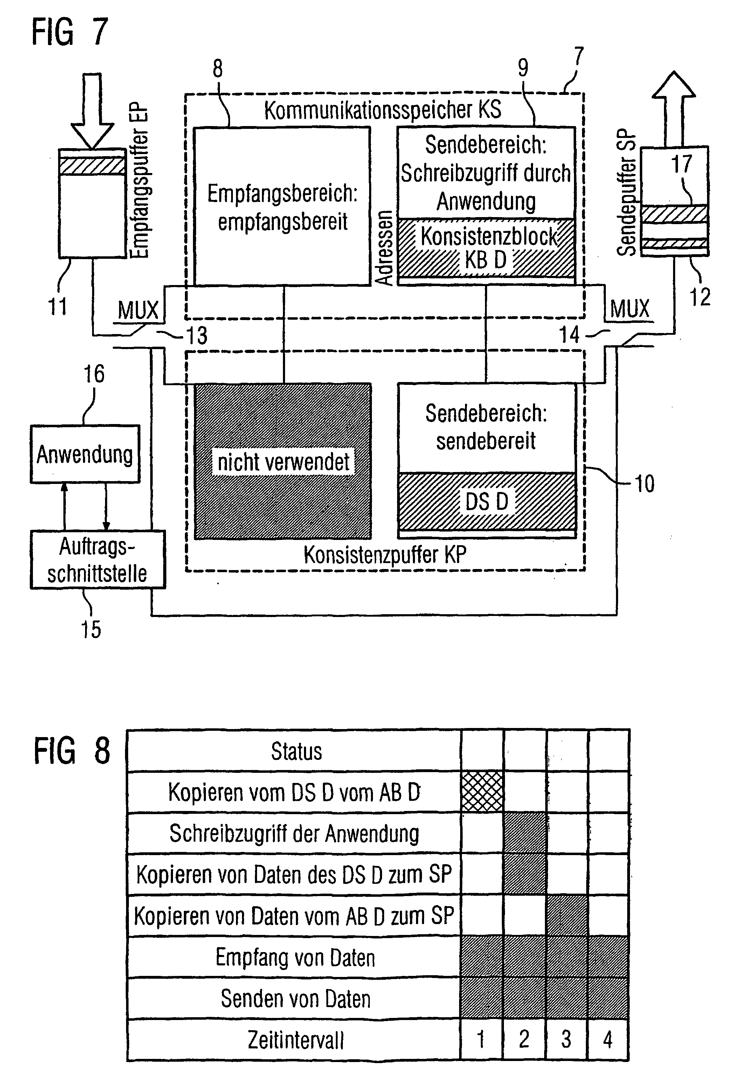

Figur 7 zeigt das System aus Figur 5 während eines Schreibzugriffs. Der Adressbereich des Konsistenzblocks KB D wird von der Anwendung 16 direkt im Sendebereich 9 des Kommunikationsspeichers 7 beschrieben. Der Datensatz DS D aus dem Adressbereich des Konsistenzblocks KB D befindet sich im Konsistenzpuffer 10. Vorteilhaft ist, dass im Sendepuffer 12 ein vollständiger Satz von Daten 17 für die Versendung "vorrätig" ist. Dabei bedeutet vollständig, dass der Satz alle Daten umfasst, die während des nächsten Sendevorgangs versandt werden sollen.

Figur 8 veranschaulicht den Ablauf eines erfindungsgemäßen Schreibzugriffs in dem System der Figur 7. Vor dem Schreibzugriff der Anwendung 16 wird der Datensatz DS D aus dem Adressbereich AB D des Konsistenzblocks KB D, den die Anwendung während des Schreibzugriffs beschreibt bzw. beschreiben könnte, vom Sendebereich 9 des Kommunikationsspeichers 7 zum Konsistenzpuffer 10 kopiert. Während des Schreibzugriffs können konsistente Daten aus dem Datensatz DS D vom Konsistenzpuffer 10 zum Sendepuffer 12 versandt werden. Die Auftragsschnittstelle 15 verbindet deshalb den Konsistenzpuffer 10 mit dem Sendepuffer 12.

Ist der Schreibzugriff der Anwendung 16 vor Beendigung des Kopiervorgangs des Datensatzes DS D vom Konsistenzpuffer 10 zum Sendepuffer 12 beendet, wird der Kopiervorgang abgebrochen. Um die Versendung eines vollständigen Datensatzes vom Sendepuffer 12 zu gewährleisten, muss in diesem deshalb ein Datensatz 17 vorrätig sein.

Nach dem Schreibzugriff können Daten aus dem Adressbereich AB D wieder vom Sendebereich 9 des Kommunikationsspeichers 7 zum Sendepuffer 12 weitergeleitet werden. Daten, die sich nicht im Adressbereich AB D befinden, können auch während des Schreibzugriffs vom Empfangsbereich 9 des Kommunikationsspeichers 9 zum Sendepuffer 12 weitergeleitet werden. Daten können unabhängig vom Schreibzugriff am Empfangsport empfangen werden und am Sendepuffer 12 versandt werden.

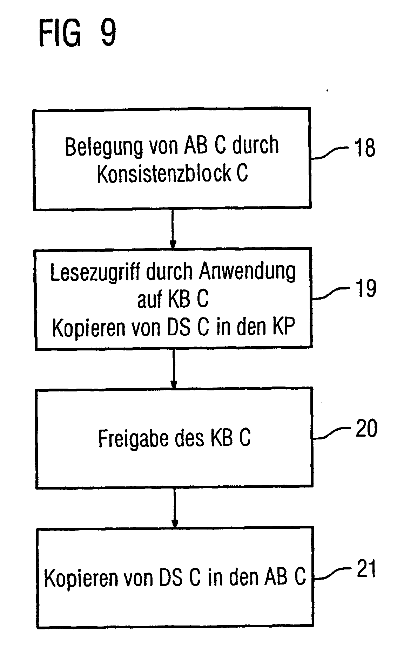

Figur 9 zeigt das Flussdiagramm eines erfindungsgemäßen Lesezugriffs. Zunächst wird ein Adressbereich AB C im Empfangsbereich des Kommunikationsspeichers durch einen Konsistenzblock KB C belegt (Schritt 18). "Belegung mit einem Konsistenzblock" bedeutet in diesem Zusammenhang, dass Daten vom Empfangsport weder in den durch einen Konsistenzblock belegten Adressbereich kopiert werden können, noch vom durch einen Konsistenzblock belegten Adressbereich zum Sendepuffer kopiert werden können. Der Adressbereich C umfasst Adressen, auf die die Anwendung während eines Lesezugriffs zugreift bzw. zugreifen könnte.

Im nächsten Schritt (Schritt 19) erfolgt der Lesezugriff der Anwendung auf den Konsistenzblock KB C im Kommunikationsspeicher. Gleichzeitig wird der Datensatz DS C, der an Adressen im Adressbereich AB C des Konsistenzblocks KB C adressiert ist, vom Empfangspuffer zum Konsistenzpuffer kopiert.

Nach Beendigung des Lesezugriffs wird der Konsistenzblock KB C freigegeben (Schritt 20). Der Adressbereich AB C kann nun wieder mit Daten vom Sendepuffer beschrieben werden.

Daten, die während des Lesezugriffs in den Konsistenzpuffer geschrieben wurden, können schließlich in den Adressbereich AB C des Kommunikationsspeichers kopiert werden (Schritt 21).

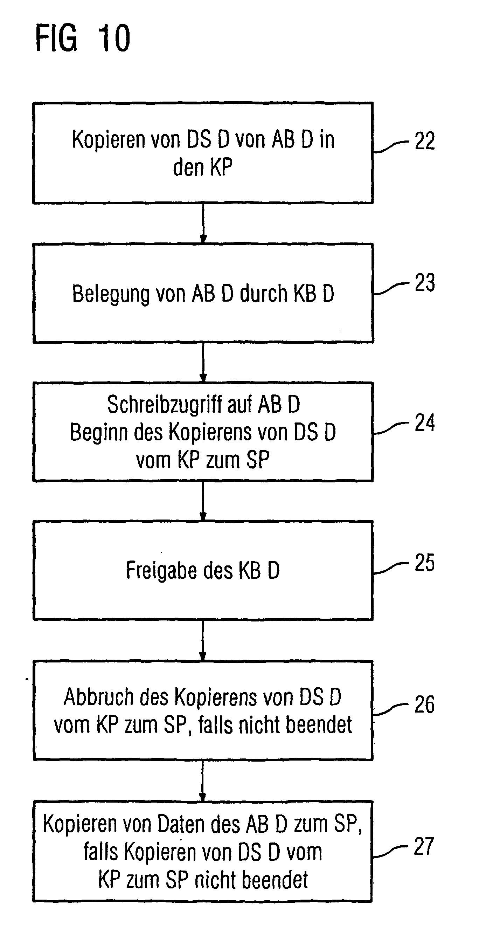

Figur 10 zeigt das Flussdiagramm eines erfindungsgemäßen Schreibzugriffs. Ein Datensatz DS D im Adressbereich AB D des Sendebereichs 9 des Kommunikationsspeichers, den die Anwendung während eines Schreibzugriffs beschreiben wird bzw. beschreiben könnte, wird zunächst in den Konsistenzpuffer 10 kopiert (Schritt 22).

Der Adressbereich AB D wird dann durch den Konsistenzblock KB D belegt (Schritt 23). Es können also Daten aus dem Adressbereich AB D zum Sendepuffer nicht mehr weitergeleitet werden.
Während des Schreibzugriffs können aber Daten des Datensatzes DS D vom Konsistenzpuffer zum Sendepuffer weitergeleitet werden (Schritt 24).

Nach Beendigung des Schreibzugriffs wird der Konsistenzblock KB D freigegeben (Schritt 25). Es können wieder Daten aus dem Adressbereich AB D zum Sendepuffer weitergeleitet werden.

Der Kopiervorgang von Daten des Datensatzes DS D vom Konsistenzpuffer zum Sendepuffer wird abgebrochen, falls er nicht vor Beendigung des Schreibzugriffs abgeschlossen ist (Schritt 26) und durch die aktuellen Daten aus dem Kommunikationsspeicher ersetzt.

Ein aktueller Datensatz wird dann aus dem Adressbereich AB D des Konsistenzblocks KB D zum Sendepuffer kopiert (Schritt 27).

## Patentansprüche

1. Verfahren zur Verarbeitung konsistenter Datensätze durch eine asynchrone Anwendung (16) eines Teilnehmers mit einem Sendepuffer (12), einem Empfangspuffer (11), einem Kommunikationsspeicher (7) und einem Konsistenzpuffer (10) in einem isochronen, zyklischen Kommunikationssystem, wobei der Kommunikationsspeicher (7) einen Empfangsbereich (8) und einen Sendebereich (9) aufweist, mit folgenden Schritten:
- Belegung eines ersten Adressbereichs im Empfangsbereich (8) des Kommunikationsspeichers (7) durch einen Konsistenzblock;
- Lesezugriff der Anwendung (16) auf den ersten Adressbereich;
- Verwendung des Konsistenzpuffers (10) anstelle des ersten Adressbereichs im Empfangsbereich (8) des Kommunikationsspeichers (7) für die Speicherung eines ersten Datensatzes vom Empfangspuffer (11);
- Freigabe des Konsistenzblocks nach Beendigung des Lesezugriffs;
- Kopieren des ersten Datensatzes vom Konsistenzpuffer (10) in den ersten Adressbereich.

2. Verfahren zur Verarbeitung konsistenter Datensätze durch eine asynchrone Anwendung (16) eines Teilnehmers mit einem Sendepuffer (12), einem Empfangspuffer (11), einem Kommunikationsspeicher (7) und einem Konsistenzpuffer (10) in einem isochronen, zyklischen Kommunikationssystem, wobei der Kommunikationsspeicher (7) einen Empfangsbereich (8) und einen Sendebereich (9) aufweist, mit folgenden Schritten:
- Kopieren eines zweiten Datensatzes aus einem zweiten Adressbereich im Sendebereich (9) des Kommunikationsspeichers (7);
- Belegung des zweiten Adressbereichs durch einen Konsistenzblock;
- Schreibzugriff der Anwendung (16) auf den zweiten Adressbereich;
- Freigabe des Konsistenzblocks nach Beendigung des Schreibzugriffs.

3. Verfahren nach Anspruch 2 mit dem folgenden, weiteren Schritt:
- Beginn des Kopierens von Daten des zweiten Datensatzes vom Konsistenzpuffer (10) zum Sendepuffer (12) während des Schreibzugriffs der Anwendung (16).

4. Verfahren nach Anspruch 3 mit dem folgenden, weiteren Schritt für den Fall, dass das Kopieren von Daten des zweiten Datensatzes vom Konsistenzpuffer (10) zum Sendepuffer (12) nicht bei Beendigung des Schreibzugriffs abgeschlossen ist:
- Abbruch des Kopierens von Daten des zweiten Datensatzes vom Konsistenzpuffer (10) zum Sendepuffer (12);
- Kopieren von Daten vom zweiten Adressbereich zum Sendepuffer (12).

5. Teilnehmer mit einer Anwendung (16), einem Sendepuffer (12), einem Empfangspuffer (11), einem Kommunikationsspeicher (7), einem Konsistenzpuffer (10) und einer Auftragsschnittstelle (15) mit Mitteln zum:
- Belegen eines ersten Adressbereichs im Empfangsbereich (8) des Kommunikationsspeichers (7) durch einen Konsistenzblock;
- Lesen des ersten Adressbereichs durch die Anwendung (16);
- Verwenden des Konsistenzpuffers (10) anstelle des ersten Adressbereichs für die Speicherung eines ersten Datensatzes vom Empfangspuffer (11);
- Freigeben des Konsistenzblocks nach Beendigung des Lesezugriffs durch die Anwendung (16);
- Kopieren des ersten Datensatzes vom Konsistenzpuffer (19) zum ersten Adressbereich.

6. Teilnehmer mit einer Anwendung (16), einem Sendepuffer (12), einem Empfangspuffer (11), einem Kommunikationsspeicher (7), einem Konsistenzpuffer (10) und einer Auftragsschnittstelle (15) mit Mitteln zum:
- Kopieren eines zweiten Datensatzes aus einem zweiten Adressbereich im Sendebereich (9) des Kommunikationsspeichers (7) in den Konsistenzpuffer (10);
- Belegen des zweiten Adressbereichs durch einen Konsistenzblock;
- Beschreiben des zweiten Adressbereichs durch die Anwendung (7);
- Freigeben des Konsistenzblocks nach Beendigung des Schreibzugriffs.

7. Teilnehmer nach Anspruch 6 mit einem Mittel zum Kopieren von Daten des zweiten Datensatzes vom Konsistenzpuffer (10) zum Sendepuffer (12).

8. Teilnehmer nach Anspruch 7 mit einem Mittel zum Kopieren von Daten aus dem zweiten Adressbereich zum Sendepuffer (12).

9. Teilnehmer nach einem der Ansprüche 5 bis 8, wobei der Sendepuffer (12) immer einen vollständigen Datensatz zum Versenden vorrätig hat.

10. Isochrones, zyklisches Kommunikationssystem mit mindestens einem Teilnehmer nach einem der Ansprüche 5 bis 9.

## Claims

1. Method for processing consistent data sets by an asynchronous application (16) of a subscriber with a transmit buffer (12), a receive buffer (11), a communication memory (7) and a consistency buffer (10) in an isochronous, cyclical communication system, the communication memory (7) featuring a receive zone (8) and a transmit zone (9), with the following steps:
- Reservation of a first address range in the receive zone (8) of the communication memory (7) by a consistency block;
- Read access by the application (16) to the first address range;
- Use of the consistency buffer (10) instead of the first address range in the receive zone (8) of the communication memory (7) for storage of a first data set from the receive buffer (11);
- Release of the consistency block after read access has ended;
- Copying of the first data set from the consistency buffer (10) into the first address range.

2. Method for processing consistent data sets by an asynchronous application (16) of a subscriber with a transmit buffer (12), a receive buffer (11), a communication memory (7) and a consistency buffer (10) in an isochronous, cyclical communication system, the communication memory (7) featuring a receive zone (8) and a transmit zone (9), with the following steps:
- Copying of a second data set from a second address range in the transmit zone (9) of the communication memory (7);
- Reservation of the second address range by a consistency block;
- Write access by the application (16) to the second address range;
- Release of the consistency block after write access has ended.

3. Method in accordance with Claim 2 with the following further step:
- Beginning the copying of data of the second data set from the consistency buffer (10) to the transmit buffer (12) during write access by the application (16).

4. Method in accordance with Claim 3 with the following further step for the case in which the copying of data of the second data set from the consistency buffer (10) to the transmit buffer (12) is not concluded when write access ends:
- Aborting the copying of data of the second data set from the consistency buffer (10) to the transmit buffer (12);
- Copying of data from the second address range to the transmit buffer (12).

5. Subscriber with an application (16), a transmit buffer (12), a receive buffer (11), a communication memory (7), a consistency buffer (10) and a job interface (15) with means for:
- Reservation of a first address range in the receive zone (8) of the communication memory (7) by a consistency block;
- Reading of the first address range by the application (16);
- Use of the consistency buffer (10) instead of the first address range for storage of a first data set from the receive buffer (11);
- Release of the consistency block after read access is ended by the application (16);
- Copying the first data set from the consistency buffer (19) to the first address range.

6. Subscriber with an application (16), a transmit buffer (12), a receive buffer (11), a communication memory (7), a consistency buffer (10) and a job interface (15) with means for:
- Copying a second data set from a second address range in the transmit zone (9) of the communication memory (7) into the consistency buffer (10);
- Reservation of the second address range by a consistency block;
- Writing of the second address range by the application (7);
- Release of the consistency block after the end of write access.

7. Subscriber in accordance with Claim 6 with a means for copying data of the second data set from the consistency buffer (10) to the transmit buffer (12).

8. Subscriber in accordance with Claim 7 with a means for copying data from the second address range to the transmit buffer (12).

9. Subscriber in accordance with one of Claims 5 to 8, the transmit buffer (12) always having a complete data set in stock for transmission.

10. Isochronous, cyclical communication system with at least one subscriber in accordance with one of Claims 5 to 9.

## Revendications

1. Procédé pour le traitement d'ensembles de données cohérents par une application asynchrone (16) d'un utilisateur comportant un tampon d'émission (12), un tampon de réception (11), une mémoire de communication (7) et un tampon cohérent (10) dans un système de communication isochrone cyclique, la mémoire de communication (7) comportant une zone de réception (8) et une zone d'émission (9), avec les étapes suivantes :
- occupation d'une première zone d'adresse dans la zone de réception (8) de la mémoire de communication (7) par un bloc cohérent ;
- accès en lecture de l'application (16) à la première zone d'adresse ;
- utilisation du tampon cohérent (10) à la place de la première zone d'adresse dans la zone de réception (8) de la mémoire de communication (7) pour la mémorisation d'un premier ensemble de données provenant du tampon de réception (11) ;
- libération du bloc cohérent à la fin de l'accès en lecture ;
- copie du premier ensemble de données du tampon cohérent (10) vers la première zone d'adresse.

2. Procédé pour le traitement d'ensembles de données cohérents par une application asynchrone (16) d'un utilisateur comportant un tampon d'émission (12), un tampon de réception (11), une mémoire de communication (7) et un tampon cohérent (10) dans un système de communication isochrone cyclique, la mémoire de communication (7) comportant une zone de réception (8) et une zone d'émission (9), avec les étapes suivantes :
- copie d'un deuxième ensemble de données d'une deuxième zone d'adresse située dans la zone de réception (9) de la mémoire de communication (7) vers le tampon cohérent ;
- occupation de la deuxième zone d'adresse par un bloc cohérent ;
- accès en écriture de l'application (16) à la deuxième zone d'adresse ;
- libération du bloc cohérent à la fin de l'accès en écriture.

3. Procédé selon la revendication 2, avec l'autre étape suivante :
- début de la copie de données du deuxième ensemble de données du tampon cohérent (10) vers le tampon d'émission (12) pendant l'accès en écriture de l'application (16).

4. Procédé selon la revendication 3, avec l'autre étape suivante pour le cas où la copie de données du deuxième ensemble de données du tampon cohérent (10) vers le tampon d'émission (12) ne serait pas terminée à la fin de l'accès en écriture :
- interruption de la copie de données du deuxième ensemble de données du tampon cohérent (10) vers le tampon d'émission (12) ;
- copie de données de la deuxième zone d'adresse vers le tampon d'émission (12).

5. Utilisateur comportant une application (16), un tampon d'émission (12), un tampon de réception (11), une mémoire de communication (7), un tampon cohérent (10) et une interface de commande (15) ainsi que des moyens pour :
- l'occupation d'une première zone d'adresse dans la zone de réception (8) de la mémoire de communication (7) par un bloc cohérent ;
- la lecture de la première zone d'adresse par l'application (16) ;
- l'utilisation du tampon cohérent (10) à la place de la première zone d'adresse pour la mémorisation d'un premier ensemble de données provenant du tampon de réception (11 ) ;
- la libération du bloc cohérent à la fin de l'accès en lecture par l'application (16) ;
- la copie du premier ensemble de données du tampon cohérent (10) vers la première zone d'adresse.

6. Utilisateur comportant une application (16), un tampon d'émission (12), un tampon de réception (11), une mémoire de communication (7), un tampon cohérent (10) et une interface de commande (15) ainsi que des moyens pour :
- la copie d'un deuxième ensemble de données d'une deuxième zone d'adresse située dans la zone de réception (9) de la mémoire de communication (7) vers le tampon cohérent (10) ;
- l'occupation de la deuxième zone d'adresse par un bloc cohérent ;
- l'écriture de la deuxième zone d'adresse par l'application (16) ;
- la libération du bloc cohérent à la fin de l'accès en écriture.

7. Utilisateur selon la revendication 6 comportant un moyen pour copier des données du deuxième ensemble de données du tampon cohérent (10) vers le tampon d'émission (12).

8. Utilisateur selon la revendication 7 comportant un moyen pour copier des données de la deuxième zone d'adresse vers le tampon d'émission (12).

9. Utilisateur selon l'une des revendications 5 à 8, dans lequel le tampon d'émission (12) a toujours en réserve un ensemble de données complet pour l'émission.

10. Système de communication isochrone cyclique comportant au moins un utilisateur selon l'une des revendications 5 à 9.
